# EUROPEAN PATENT SPECIFICATION

(11) **EP 2 322 032 B1**
(45) Date of publication and mention of the grant of the patent: **13.03.2013**
(21) Application number: 10189972.2
(22) Date of filing: 04.11.2010
(51) Int. Cl.: A01G 23/091, A01G 23/081

(54) **Energy wood grapple**
Greifer für Holz zur Energiegewinnung
Benne preneuse pour bois à récupération d'énergie

(30) Priority: 12.11.2009 FI 20096178
(43) Date of publication of application: 18.05.2011
(73) Proprietor: Mense Oy, 54500 Taavetti (FI)
(72) Inventor: Mentula, Seppo, 54500, Taavetti (FI)
(74) Representative: Papula Oy

(56) References cited:
- EP-A1- 2 106 691
- FR-A1- 2 553 969
- US-A- 3 915 209
- US-A- 5 201 350
- US-A- 5 390 715

## Description

### FIELD OF THE INVENTION

The invention relates to the energy wood grapple defined in the preamble of claim 1.

### BACKGROUND OF THE INVENTION

Conventionally, the management of seeding stands and young forests that have already reached the thinning stage has for decades been done by clearing saws. As efficiency and economy requirements are growing, different clearing devices that are mounted to the heads of long knuckle booms in work machines have been developed for these tasks. As the energy use of wood has strongly increased, also a need to recover as well as possible the small-dimensioned trees from thinning has emerged.

Owing to the above-said, so-called energy wood grapples have been developed in order to be also able to collect the trees to be felled in suitable bundles, or even to load them straight to the platform of a work machine in bundles. Energy wood grapples comprise hydraulically operated grapples, often two pairs of grapples one upon the other, connected by joints to the frame and able to be turned against each other in a staggered manner. This way, one pair of grapples is used to keep the trees that have been cut in place, while the other pair is used to guide and clamp more trees to be cut in the same bundle. Under the grapples there is a cutter in order to cut individual trees or ones clamped in a bundle.

The closest prior art has been described in patent application EP 2106691 A1. This energy wood grapple comprises two pairs of grapples in order to grip the trees to be worked on. A guillotine-type cutting device is supported on the frame under the grapples in order to cut the trees held by the grapples.

The known cutters function in a guillotine-type manner by means of a turning blade flange provided with moving blades or a saw chain. In guillotines, the biggest problem is their slowness. In chain saws, the biggest problem is the susceptibility to damages, particularly when working on small trees. The small trees turn and bend the chains so that they break too often in order to achieve efficient clearing result. In addition, the chains do not stand impurities, earth or stones from the roots of trees, so they require continuous changing and sharpening. A common big drawback in both cutting techniques is the possibility to cut only one or closely adjacent trees at a time. Similarly, small trees and twigs are difficult and slow to be worked on by these devices. Therefore, efficient and thorough management of seeding stands must be performed in two steps, by first using a collecting energy wood grapple to gather the larger bodies, i.e. those having a stump diameter of more than 3cm, for energy wood. After this, the area must be cleared from small twigs, for example by hand using clearing saws.

### OBJECTIVE OF THE INVENTION

An objective of the invention is to eliminate the drawbacks of the prior art referred to above. Especially, an objective of the invention is to disclose a new energy wood grapple which makes it possible to clear an entire area to be worked on by one efficient and quick working cycle, recovering in one go all trees that are suitable for energy use even more carefully than at present. Furthermore, an objective of the invention is to disclose an energy wood grapple that is quick and easy to use, and wherein the blade remains sharp and keeps its cutting properties even in impure conditions.

### SUMMARY OF THE INVENTION

The energy wood grapple according to the invention is characterized by what has been presented in claim 1.

The energy wood grapple according to the invention is meant to be mounted to the head of hydraulic knuckle booms supported on a work machine in order to thin and clear trees and bushes. The working machines used may be different forestry machines, tractors and equivalent. In the same way, the structure of the knuckle booms, the number of booms therein and their length, as well as the possible telescopic extension parts may vary according to the required reach and other requirements. The energy wood grapple includes a frame and at least one pair of grapples arranged to be turned substantially horizontally against each other on the frame in order to grip the substantially vertical trees to be worked on. The operation of the pair of grapples as that of the other parts and mechanisms on the frame is most suitably implemented by hydraulics to be applied from the work machine to the frame of the energy wood grapple in a manner known per se. Furthermore, under the pair of grapples there is a cutter supported on the frame in order to cut the tree or trees held by the pair of grapples. According to the invention the energy wood grapple includes two cutters to be used and operated independently of each other, i.e. the lower cutter and the upper cutter, disposed one upon the other on the frame of the energy wood grapple. The lower cutter includes two elongated and flat saw blades disposed with their plane surfaces facing each other, both arranged to be moved in their longitudinal direction back and forth relative to the frame and in opposed directions relative to each other at the same pace. Furthermore, according to the invention the long edges of the saw blades pointing in the same direction, i.e. at least one pair of edges, include opposingly cutting knife-type rows of blades. In addition, the upper cutter is formed by a chain saw, i.e. a blade flange to be turned relative to the frame and a saw chain wrapped around it.

The length of the rows of blades, i.e. the working width of the device, is at least 0.5 meters and it may even be almost one meter. In practice, working with a device that is much wider than this is too cumbersome. The length of the turning blade flange, on the other hand, may be chosen so as to be able to cut even a thicker tree clamped by the pair of grapples.

In a preferred embodiment of the invention the energy wood grapple includes two pairs of grapples located one upon the other on the frame in order to collect the trees to be cut in a bundle on the grapples.

Preferably, the saw blades are supported on back and forth moving guide bars mounted to the frame. The guide bars may be separate parts, the saw blades being movably bearing-mounted between them. Similarly, the guide bars may partially or completely consist of fixed parts of the frame. It is essential that the saw blades have supporting and bearing surfaces between and on which the saw blades are able to move back and forth.

In one embodiment of the invention the guide bars are supported rigidly on the frame. In this case the knife-type rows of blades of the saw blades are fitted below the pairs of grapples so that as the grapples grip and pull trunks toward the frame of the device, the rows of blades cut the trunks.

In a second embodiment of the invention the guide bars are supported on the frame rigidly in the direction of movement of the saw blades, and in the cross direction movably between a protective position under the frame and a cutting position under the grapples. In this case, the grapples first grip the trees to be cut. Once the trees are in place and firmly held by the grapples, the saw blades that move back and forth come out below the grapples from under the frame of the device in the cross direction relative to their direction of movement, cutting the trunks clamped by the grapples.

In a third embodiment of the invention the guide bars are supported on the frame by joints at one end in order to turn the rows of blades of the saw blades against the tree clamped by the grapples. In this embodiment the cutting rows of blades are also tucked away under the frame at the beginning. When the trunks are in place and clamped by the grapples, the rows of blades that move back and forth relative to each other turn out from under the frame by turning below the grapples like a folding knife and cut the trunks. In this embodiment the rows of blades may also be turned out completely, i.e. outside the grapples, in which case the rows of blades may be easily used to clear smaller bushes and twigs without recovering them by the grapples.

The invention has taken into account the fact that the knife-type rows of blades do not necessarily operate faultlessly and quickly enough when for example trees having a diameter of more than 20cm are met during clearing that would also need to be cut and recovered. Therefore, a second, i.e. upper, cutter is installed in the device according to the invention, located below the pairs of grapples but above the knife-type cutting rows of blades. The upper cutter used is a chain saw provided with a turning blade flange. The chain saw is well protected inside the frame of the device between the pair of grapples and the clearing, cutting blade in an off-position, but, if necessary, i.e. when gripping a sufficiently thick trunk by the pair of grapples, it can be easily turned out in order to cut the trunk. This way, the chain saw stays sharp for a long time as it is seldom used. Furthermore, as it is located above the lower cutter, it may not be used to saw and does not reach right to the bottom of a trunk that contains impurities which would blunt the blade. The suitable protective space for the chain saw in the frame between the pair of grapples and the lower cutter also guarantees that, when using the lower cutter and the pairs of grapples, the trunks that have been cut are not able to contact and damage the chain disposed in its position.

The energy wood grapple according to the invention has important advantages compared with the corresponding known devices. Because the cutting width of the device is large, it may be used to substantially simultaneously recover the thicker trunks suitable for energy wood and cut all the smaller twigs and bushes. This way, there is no need for two different and separate work cycles for example by an energy wood harvester and thereafter by a clearing saw, which is very common nowadays. Secondly, because the blade structure of the device is nearly insensitive to different impurities, it is possible to work with the same blade for days, even for weeks, without maintenance, whereas the presently used cutting blades require daily maintenance.

Furthermore, an advantage of the invention is the good protection of the rows of blades and the chain saw in applications where the blades are protected under the frame when not used for working. They may even be encapsulated under the frame. This way, the rows of blades and the chain saw are not able to become damaged in any conditions when working on, such as collecting, loading and unloading, the trunks collected in the grapple. Furthermore, when the grapples of the device are kept fully closed and thus out of the way from the vicinity of the cutting blades, the device can be easily used as an efficient clearing device for bushes and grasses without a collecting function, the rows of blades being either ejected perpendicularly to their direction of movement or turned out as a folding knife.

### LIST OF FIGURES

In the following, the invention will be described in detail by means of examples of its embodiments, with reference to the accompanying drawings, in which
Fig. 1 presents one energy wood grapple according to the invention in a first service position,
Fig. 2 presents the energy wood grapple of Fig. 1 in a second service position and
Fig. 3 presents the energy wood grapple of Fig. 1 in a third service position.

### DETAILED DESCRIPTION OF THE INVENTION

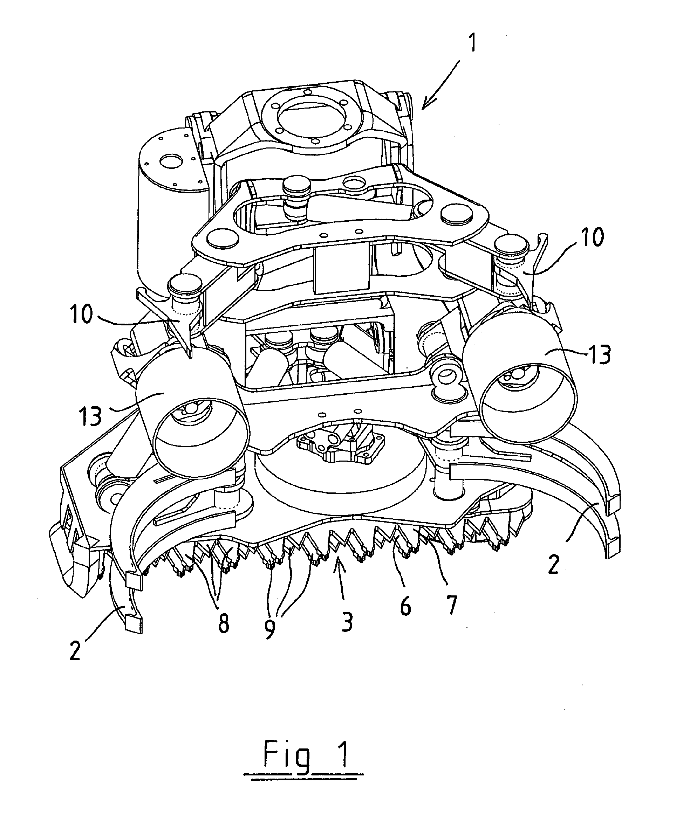

Fig. 1 to 3 present one energy wood grapple according to the invention including a frame 1 to be mounted to the head of knuckle booms of a work machine to be used. Mounted to the bottom of one of the sides of the frame is a first pair of grapples 2, and mounted above them is a second pair of grapples 10. In Fig. 1 both of the pairs of grapples are open. They are arranged to be used in a manner known per se. Thus, the larger and lower first pair of grapples 2 is used to collect and pull the trunks to be cut to a lower cutter 3, and the smaller and upper second pair of grapples 10 is used to keep the trunks that have been cut in place and against the frame while the first pair of grapples is open.

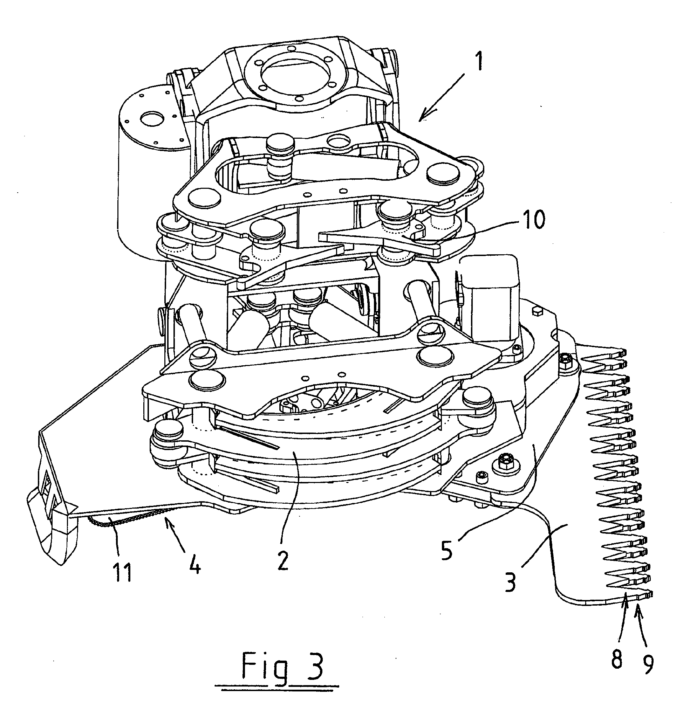

In the device of Fig. 1 to 3, mounted to the bottom of the frame 1 below the pairs of grapples is a trunk cutter 3. It includes guide bars 5 supported on the frame 1, i.e. horizontal plates at a suitable distance from each other so that there is enough space between them to move two saw blades 6 and 7 back and forth. These saw blades 6 and 7 are straight and elongated plates with knife-type and substantially V-shaped rows of blades 8 and 9 at one of their long edges. The knife-type rows of blades and the respective guide bars form an assembly which, in an off-position, is disposed under the frame 1 behind the grapples 2, but when the grapples are holding trunks, this assembly may be turned according to Fig. 3, i.e. like a folding knife, so that the rows of blades 8 and 9 that move back and forth saw and crush down the trunks which are clamped against the frame 1 by the curved pair of grapples.

In the off-position the guide bars, the saw blades and therefore also the rows of blades are disposed at the back, i.e. protected under the frame 1. This way, the grapples may be used to work quickly and grab one or more trunks even with quick movement of the device. After this, the turning out of the rows of blades is suitably adjusted and arranged to be optimal for example as required by the cutting speed of the blades. Similarly, the blades can be kept protected under the frame for example when the grapple is used to move or load trunks or in equivalent work where the cutter is not needed at all.

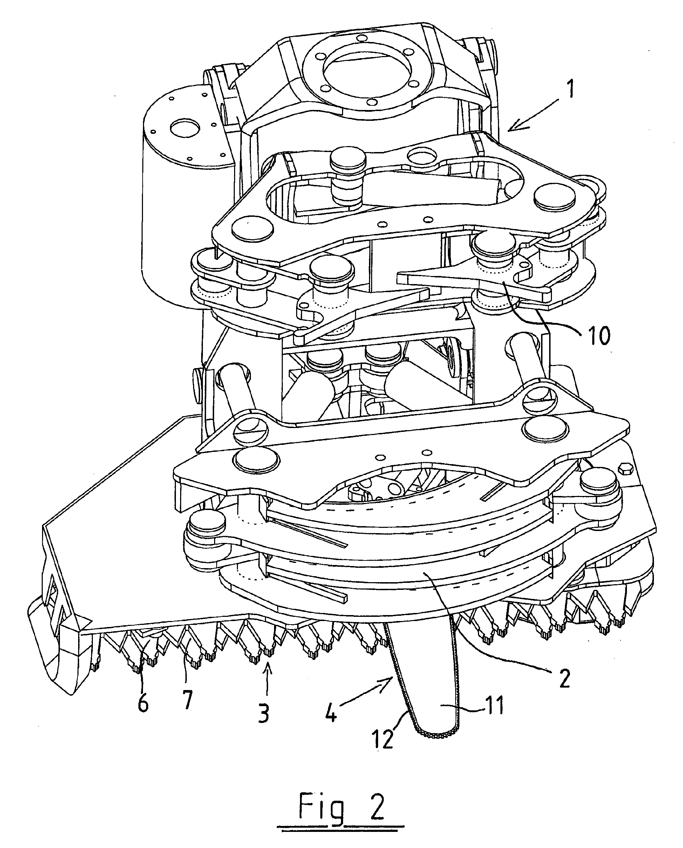

As seen from Fig. 2, between the lower cutter 3 and the lower pair of grapples 2 there is an upper cutter 4 formed by a chain saw having a blade flange 11 that can be turned relative to the frame 1 and a saw chain 12 wrapped around the blade flange. In the off-position, the chain saw is hidden in a protected space between the lower cutter 3 and the lower pair of grapples 2 under the frame 1. This way, it is not shown in Fig. 1 and shows only slightly in Fig. 3. Instead, when using the chain saw according to Fig. 2, it turns to the front and outwards, extending for the entire area where the pair of grapples 2 is possibly holding a thicker trunk to be cut which would be quite difficult and slow to be cut by the lower cutter 2.

Fig. 3 also depicts an application of the device where both of the pairs of grapples 2 and 10 are closed and pressed against the frame 1 to take up as little space as possible. At the same time, the upper cutter 4 is kept in the protected space under the lower pair of grapples 2. The lower cutter 3 is turned for approximately 90° forward and to the side so that the cutting rows of blades 8 and 9 are pointed to the side and are clearly disposed outside the space delimited by the frame 1. In this position, the energy wood grapple can be easily used to clear different smaller twigs and bushes as well as to perform landscape management without recovering the growth that has been cut. This way, a single energy wood grapple according to the invention may be used to 1) cut and recover individual thicker trees, 2) efficiently cut and bundle timber of varying thickness suitable as energy wood or to be recovered for other purposes and 3) clear grasses, bulrushes, thickets and other growth that is unsuited for energy recovery. Also, nothing prevents one from using the energy wood grapple merely as a lifting tong for example to load and unload trunks and bundles of trunks lying on the ground. In this case, naturally, both of the cutters are kept protected under the frame.

In addition, Fig. 1 presents one additional preferred embodiment of the invention comprising transfer rolls 13 which are known per se, supported on the frame 1 between both grapples of the pairs of grapples 2 and 10. They comprise a cylindrical casing having spikes, nodules, rails or other roughness on its surface in order to stick to the trunks supported by the grapples so as to be able to move the trunks in their longitudinal direction by the rolls. The hydraulically operated transfer rolls 13 provide for easier working on particularly individual, larger and longer trunks to be cut by the blade flange, in order to cut them to a length corresponding to the rest of the material to be recovered.

The operation of the devices according to the invention is suitably carried out using hydraulics. The pairs of grapples are moved by suitable hydraulic cylinders, and the back and forth movements of the saw blades can be easily carried out by a hydraulic motor and a cam rotated by it. In the same way, turning the saw blade to the front and withdrawing it under the frame can simply be carried out by a hydraulic cylinder. Furthermore, the operation of the chain saw is easily carried out by a hydraulic motor.

The invention is not limited merely to the exemplifying embodiments referred to above; instead, many variations are possible within the scope of the inventive idea defined by the claims.

## Claims

1. An energy wood grapple to be mounted to the head of hydraulic knuckle booms supported on a work machine in order to thin and clear trees and bushes, the energy wood grapple including a frame (1), at least one pair of grapples (2) arranged to be turned substantially horizontally against each other on the frame in order to grip the substantially vertical trees to be worked on, and, under the pair of grapples, a lower cutter (3) supported on the frame in order to cut the tree or trees held by the pair of grapples, **characterized in that** the energy wood grapple includes an upper cutter (4), the two cutters (3,4) two cutters operating independently of each other, wherein a lower cutter (3) includes two elongated saw blades (6,7) with their planar surfaces disposed facing each other, both arranged to be moved in their longitudinal direction back and forth relative to the frame and in opposed directions relative to each other at the same pace, and the long edges of the saw blades pointing in the same direction include opposingly cutting knife-type rows of blades (8,9), and wherein an upper cutter (4) is formed by a chain saw having a blade flange (11) that turns relative to the frame (1) and a chain (12) wrapped around it.

2. The energy wood grapple according to claim 1, **characterized in that** the energy wood grapple includes two pairs of grapples (2,10) in order to collect the trees to be cut in a bundle on the grapples.

3. The energy wood grapple according to claim 1 or 2, **characterized in that** the saw blades (6, 7) are supported on back and forth moving guide bars (5) mounted to the frame (1).

4. The energy wood grapple according to claim 3, **characterized in that** the guide bars are supported rigidly on the frame.

5. The energy wood grapple according to claim 3, **characterized in that** the guide bars are supported rigidly on the frame in the direction of movement of the saw blades, and in the cross direction to be moved between a protective position under the frame and a cutting position under the grapples.

6. The energy wood grapple according to claim 3, **characterized in that** the guide bars (5) are supported on the frame (1) by a joint at one end in order to turn the rows of blades of the saw blades against the tree clamped by the grapples.

7. The energy wood grapple according to any one of claims 1 to 6, **characterized in that** the upper cutter (4) is located between the lower cutter (3) and the lower pair of grapples (2).

8. The energy wood grapple according to claim 7, **characterized in that** between the lower cutter (3) and the lower pair of grapples (2) there is a protected space where the upper cutter (4) is protected and out of the reach of contact from the trees cut by the lower cutter.

9. The energy wood grapple according to any one claims 1 to 8, **characterized in that** the energy wood grapple includes transfer rolls (13) in order to move the trunks or bundles of trunks carried by the pairs of grapples (2,10) in their longitudinal direction.

10. The energy wood grapple according to claim 9, **characterized in that** the transfer rolls (13) are located between the lower pair of grapples (2) and the upper pair of grapples (10).

## Patentansprüche

1. Energieholzgreifer, der am Kopf von auf einer Arbeitsmaschine gehalterten, hydraulischen Gelenkauslegern anzubringen ist, um Bäume und Büsche auszulichten und auszuräumen, wobei der Energieholzgreifer einen Rahmen (1), mindestens ein Paar Greifer (2), die angeordnet sind, um in Wesentlich horizontal gegeneinander am Rahmen gedreht zu werden, um die zu bearbeitenden, im Wesentlichen vertikalen Bäume zu ergreifen, und, unter dem Paar Greifer, eine am Rahmen gehalterte untere Schneidevorrichtung (3) umfasst, um den/die von dem Paar Greifer festgehaltene/n Baum/Bäume zu schneiden, **dadurch gekennzeichnet, dass** der Energieholzgreifer eine obere Schneidevorrichtung (4) umfasst, wobei die beiden Schneidevorrichtungen (3, 4) unabhängig voneinander arbeiten, wobei die untere Schneidevorrichtung (3) zwei längliche Sägeblätter (6, 7) umfasst, wobei deren planare Flächen einander zugewandt vorgesehen sind, die beide so angeordnet sind, dass sie sich in ihrer Längsrichtung in Bezug auf den Rahmen und in Bezug aufeinander in entgegengesetzten Richtungen im selben Tempo vor und zurück bewegen, und die langen Kanten der in dieselbe Richtung zeigenden Sägeblätter gegenüberliegende schneidemesserartige Klingenreihen (8, 9) umfassen, und wobei die obere Schneidevorrichtung durch eine Kettensäge gebildet ist, die ein Blattschwert (11), das sich in Bezug auf den Rahmen (1) dreht, und eine um dieses gelegte Kette (12) aufweist.

2. Energieholzgreifer nach Anspruch 1, **dadurch gekennzeichnet, dass** der Energieholzgreifer zwei Paare Greifer (2, 10) umfasst, um die zu schneidenden Bäume an den Greifern zu einem Bündel zusammenzufassen.

3. Energieholzgreifer nach Anspruch 1 oder 2, **dadurch gekennzeichnet, dass** die Sägeblätter (6, 7) an sich hin und her bewegenden Führungsstangen (5) gelagert sind, die am Rahmen (1) angebracht sind.

4. Energieholzgreifer nach Anspruch 3, **dadurch gekennzeichnet, dass** die Führungsstangen starr am Rahmen gelagert sind.

5. Energieholzgreifer nach Anspruch 3, **dadurch gekennzeichnet, dass** die Führungsstangen in der Bewegungsrichtung der Sägeblätter starr am Rahmen und in der Querrichtung so gelagert sind, dass sie zwischen einer Schutzstellung unter dem Rahmen und einer Schneidestellung unter den Greifern zu bewegen sind.

6. Energieholzgreifer nach Anspruch 3, **dadurch gekennzeichnet, dass** die Führungsstangen (5) durch ein Gelenk an einem Ende am Rahmen (1) gelagert sind, um die Klingenreihen der Sägeblätter gegen den durch die Geifer umklammerten Baum zu wenden.

7. Energieholzgreifer nach einem der Ansprüche 1 bis 6, **dadurch gekennzeichnet, dass** sich die obere Schneidevorrichtung (4) zwischen der unteren Schneidevorrichtung (3) und dem unteren Paar Greifer (2) befindet.

8. Energieholzgreifer nach Anspruch 7, **dadurch gekennzeichnet, dass** sich zwischen der unteren Schneidevorrichtung (3) und dem unteren Paar Greifer (2) ein geschützter Raum befindet, in dem die obere Schneidevorrichtung (4) geschützt und außer Kontaktreichweite von den durch die untere Schneidevorrichtung geschnittenen Bäumen ist.

9. Energieholzgreifer nach einem der Ansprüche 1 bis 8, **dadurch gekennzeichnet, dass** der Energieholzgreifer Übertragungsrollen (13) umfasst, um die von den Paaren Greifer (2, 10) getragenen Stämme oder Stammbündel in deren Längsrichtung zu bewegen.

10. Energieholzgreifer nach Anspruch 9, **dadurch gekennzeichnet, dass** sich die Übertragungsrollen (13) zwischen dem unteren Paar Greifer (2) und dem oberen Paar Greifer (10) befinden.

## Revendications

1. Benne preneuse pour bois à récupération d'énergie destinée à être montée sur la tête des flèches articulées hydrauliques supportées sur une machine de travail afin de désépaissir et de défricher des arbres et des arbustes, la benne preneuse pour bois à récupération d'énergie comprenant un châssis (1), au moins une paire de bennes preneuses (2) agencées pour être entraînées en rotation sensiblement horizontalement l'une contre l'autre sur le châssis afin de saisir les arbres sensiblement verticaux à traiter et, sous la paire de bennes preneuses, un dispositif de coupe inférieur (3) supporté sur le châssis afin de couper l'arbre ou les arbres maintenu(s) par la paire de bennes preneuses, **caractérisée en ce que** la benne preneuse pour bois à récupération d'énergie comprend un dispositif de coupe supérieur (4), les deux dispositifs de coupe (3, 4) fonctionnant indépendamment l'un de l'autre, dans laquelle un dispositif de coupe inférieur (3) comprend deux lames de scie allongées (6, 7) avec leurs surfaces planes disposées en vis à vis, les deux agencées pour être déplacées dans leur sens longitudinal selon un mouvement de va-et-vient par rapport au châssis et dans des directions opposées l'une par rapport à l'autre à la même vitesse, et les bords longs des lames de scie pointant dans la même direction comprennent des rangées de lames (8, 9) de type couteau coupant de manière opposée, et dans laquelle un dispositif de coupe supérieur (4) est formé par une scie à chaîne ayant un rebord de lame (11) qui tourne par rapport au châssis (1) et une chaîne (12) enroulée autour de lui.

2. Benne preneuse pour bois à récupération d'énergie selon la revendication 1, **caractérisée en ce que** la benne preneuse pour bois à récupération d'énergie comprend deux paires de bennes preneuses (2, 10) afin de collecter les arbres à couper en un ballot sur les bennes preneuses.

3. Benne preneuse pour bois à récupération d'énergie selon la revendication 1 ou 2, **caractérisée en ce que** les lames de scie (6, 7) sont supportées sur des barres de guidage(5) effectuant un mouvement de va-et-vient, montées sur le châssis (1).

4. Benne preneuse pour bois à récupération d'énergie selon la revendication 3, **caractérisée en ce que** les barres de guidage sont rigidement supportées sur le châssis.

5. Benne preneuse pour bois à récupération d'énergie selon la revendication 3, **caractérisée en ce que** les barres de guidage sont rigidement supportées sur le châssis dans la direction du déplacement des lames de scie et dans la direction transversale pour être déplacées entre une position de protection sous le châssis et une position de coupe sous les bennes preneuses.

6. Benne preneuse pour bois à récupération d'énergie selon la revendication 3, **caractérisée en ce que** les barres de guidage (5) sont supportées sur le châssis (1) par un joint au niveau d'une extrémité afin de faire tourner les rangées de lames des lames de scie contre l'arbre bloqué par les bennes preneuses.

7. Benne preneuse pour bois à récupération d'énergie selon l'une quelconque des revendications 1 à 6, **caractérisée en ce que** le dispositif de coupe supérieur (4) est positionné entre le dispositif de coupe inférieur (3) et la paire inférieure de bennes preneuses (2).

8. Benne preneuse pour bois à récupération d'énergie selon la revendication 7, **caractérisée en ce qu'**entre le dispositif de coupe inférieur (3) et la paire inférieure de bennes preneuses (2), il y a un espace protégé où le dispositif de coupe supérieur (4) est protégé et hors de contact par rapport aux arbres coupés par le dispositif de coupe inférieur.

9. Benne preneuse pour bois à récupération d'énergie selon l'une quelconque des revendications 1 à 8, **caractérisée en ce que** la benne preneuse pour bois à récupération d'énergie comprend des rouleaux de transfert (13) afin de déplacer les troncs ou des ballots de troncs portés par les paires de bennes preneuses (2, 10) dans leur direction longitudinale.

10. Benne preneuse pour bois à récupération d'énergie selon la revendication 9, **caractérisé en ce que** les rouleaux de transfert (13) sont positionnés entre la paire inférieure de bennes preneuses (2) et la paire supérieure de bennes preneuses (10).
